# EUROPEAN PATENT SPECIFICATION

(11) **EP 1 773 932 B1**
(45) Date of publication and mention of the grant of the patent: **14.04.2010**
(21) Application number: 05760948.9
(22) Date of filing: 21.06.2005
(51) Int. Cl.: C08K 5/09, C08K 5/3435, C08K 5/00

(54) **SOLUBILIZED ADDITIVE COMPOSITION COMPRISING ACIDIC AND BASIC CONSTITUENTS**
SOLUBILISIERTE ADDITIVZUSAMMENSETZUNG MIT SAUREN UND BASISCHEN BESTANDTEILEN
COMPOSITION D'ADDITIF SOLUBILISEE COMPRENANT DES CONSTITUANTS ACIDES ET BASIQUES

(30) Priority: 22.06.2004 US 582233 P
(43) Date of publication of application: 18.04.2007
(73) Proprietor: INVISTA Technologies S.à.r.l., 8001 Zürich (CH)
(72) Inventor: LANGRICK, Charles Richard, Middlesbrough Cleveland TS7 0GA (GB)
(74) Representative: Cockerton, Bruce Roger
(86) International application number: PCT/US2005/021965
(87) International publication number: WO 2006/002187

(56) References cited:
- EP-A- 1 449 872
- WO-A-2004/078840
- WO-A1-98/36023
- US-A1- 2004 068 089

## Description

### 1. Field of the Invention

This invention relates to an improved composition to accomplish the incorporation of additives into polymers. More particularly the invention relates to a composition to transform such polymer additives that are normally substantially insoluble in water, soluble in water, or in solvents systems that are substantially water, by means of forming their salts. The applicant would regard a substantially water insoluble polymer additive as being one with a solubility of less than about 1 w% in water at 25°C. The applicant would regard it to be that sufficient solubility would have been achieved by this invention if a solution of the transformed additive could be made with a solubility of more than about 5 w% at 25°C.

This invention also relates to utilizing such solubilized additives and their solutions for the addition to polymers, solutions of polymers, or prior to or during polymerization processes.

This invention also relates to forming a dry composition (none of the constituents are liquids nor water) comprising substantially water insoluble additives that have the capability of forming a salt with appropriate amounts of counterpart salt forming species.

### 2. Description of the Related Art

Additives for polymers, such as antioxidants, UV stabilisers but not limited to these, may be incorporated either prior to or during the polymerisation process or post polymerisation.

Post polymerisation incorporation is possible, for instance, by addition of an organic solution of an organic additive to an organic solution of the polymer. However, the handling of organic solutions can pose problems in relation to health, safety and environmental considerations.

Post polymerisation incorporation is also possible, for instance, remelting the polymer in an extruder and mixing the additive into the molten polymer in a process commonly known as compounding. Though an effective means of incorporating many additives the associated costs of compounding make it an expensive means of doing so. Hence, it is usually economically more attractive to incorporate any additives into the polymer prior to or during the polymerisation process.

Polyamides, such as Nylon 6,6 and Nylon 6, are made from monomers that are substantially water soluble. Indeed the Nylon 6,6 process usually starts with a hot solution of nylon 6,6 salt (about 51 w% salt). An advantageous feature of this is that the solution may be easily stored, transferred, pumped, metered, as and when required by the dictates of production requirements and asset availability. A further advantage is that water soluble additives, such as copper salts, manganese salts, iodide salts, acetic acid, triacetonediamine, but not limited to these, are easily added prior to or during the polymerization process and become evenly distributed within the nylon monomers solution or polymerizing mass and hence within the final polymer. Yet another advantage is that the water-based solutions do not create the health, safety and environmental problems of the organic solvent based systems.

However, there are many additives that are substantially insoluble in water, such as many of the organic antioxidant and UV stabilizers, and others well known in the art. The applicant' would regard a substantially water insoluble polymer additive as being one with a solubility of less than about 1 w% in water at 25°C. The applicant would regard it to be that sufficient solubility would have been achieved by this invention if a solution of the transformed additive could be made with a solubility of more than about 5 w% at 25°C.

In order to facilitate the ease of addition of such additives it is common to form a suspension (or dispersion) of the additive in water. It is necessary to stabilize such suspensions against flocculation or agglomeration of the additive in order to keep the additive in suspension. This is done by the presence of dispersion agents. The dispersion agents have to be carefully selected to match the additive being dispersed. Organic antioxidants or UV stabilizers may require complex dispersion agents which may comprise mixtures of wetting agents and surfactants. The producers of additive dispersions may keep the exact constituents of a proprietary nature. Moreover, these dispersing agents may have severe detrimental effects upon the polymerisation process or polymer properties. For instance, excessive foaming in the polymerization vessel may occur, or the polymer may exhibit undesirable nucleation as molten polymer cools, The dispersing agents may also decompose under the polymerization conditions, which may lead to insoluble particulate formation, color formation and other undesirable consequences,

Hence there exists a need to impart the benefits that substantially water insoluble additives give to polymers in an economic manner that facilitates their safe handing, ease of addition and incorporation, but without the use of dispersing agents with their undesirable consequences.

For those Insoluble additives that contain basic or acidic groups (for example, amine or carboxylic acid groups respectively, but not limited to these), one potential means of achieving solubilization is by forming salts of the additive. However, the fact that an additive can form a salt does not in itself guarantee that the salt will have sufficient solubility to bring the benefits sought by this invention.

For instance, in GB Pat. No. 1,366,220 assigned to Ciba-Geigy AC, the hexamethylenediamine salt of 3-(3,5-di-t-butyl-hydroxyphenyl)propionic acid is claimed as an additive to polyamide compositions. However, as demonstrated in Comparative Examples 9, 10 and 11 below, this salt has insufficient solubility in water to fall within the scope of this invention.

That Hindered Amine Light Stabilisers may form salts and that these may be used as polymer additives is well known in the art as disclosed in U.S. Pat. No. 3,684,765, U.S. Pat. No. 3,640,928 both assigned to Sankyo Company Limited, and, U.S. Pat. No. 4,049,647 assigned to Ciba-Geigy Corporation. However, none of these patents recognise that forming water-soluble salts of substantially water insoluble additives is of benefit to accomplish the incorporation of additives into polymers. That water-soluble salts of substantially water insoluble HALS additives are formed may be gleaned from U.S. Pat. No. 4,049,647 where in Example 43 the addition of stadium hydroxide renders a water soluble bicarbonate salt of a HALS derivative water insoluble by deprotonation Where upon the neutral species (that is, it is no longer a salt) is extracted into ether demonstrating its increased hydrophobic nature and poor water solubility.

### SUMMARY OF INVENTION

The present invention provides a polymer additive composition having more than 5 w% water solubility comprising: a substantially water insoluble polymer additive capable of forming a salt, said polymer additive having less than about 1 w°/o water solubility, and 2-methylpentamethylenediamine wherein the additive is inherently acidic.

The present invention further provides a polymer additive composition having more than 5 w% solubility in a mixture of water and water soluble organic compounds comprising: a substantially water insoluble polymer additive capable of forming a salt, said polymer additive having less than about 1 w% water solubility, and 2-methylpentamethylenediamine, wherein the additive is inherently acidic.

The invention provides a polymer additive composition solution in water or a solution of the composition in a mixture of water and water soluble organic compounds. In one embodiment, the water-soluble organic compound can be caprolactam.

The invention also includes a polymer additive composition wherein the substantially water insoluble additive is 3-(3,5-di-t-butyl-4-hydroxyphenyl)propionic acid (commercially available as irganox® 1310 from Ciba Specialty Chemicals, Basel, Switzerland).

The invention includes a process wherein the foregoing polymer additive compositions are added prior to, or during a polymerisation process is to produce polyamides or polyesters. In a process of the invention, the foregoing polymer additive compositions can be added to remelted polyamide or polyester polymers or to solutions of the same.

### DESCRIPTION OF THE PREFERRED EMBODIMENT

The applicant has observed that it is possible to render substantially water insoluble additives that have the capability of forming a salt substantially water soluble by forming an appropriate salt. Such a salt may form a solution in a solvent that is wholly or substantially water. A salt is made from one constituent that comprises at least one acidic moiety and another constituent that comprises at least one basic moiety. A solution of such a water soluble salt then has the advantages of being safety handled, easily stored, transferred, pumped, metered, as and when required by the dictates of production process requirements and asset availability, but without the disadvantages and undesirable consequences associated with the presence of dispersing agents in the polymerisation process or product properties.

The applicant has further observed that in certain cases it is possible to form a dry composition (none of the constituents are liquids nor water) comprising substantially water insoluble additives that have the capability of forming a salt with appropriate amounts of counterpart salt forming species. The unreacted dry composition (that is salt formation has not occurred in the dry state) has the advantage that it may be transported more economically than the aqueous solution, and may simply be constituted into an aqueous solution by adding water at the place of use. A further economic advantage of the dry composition may occur in Europe if the substantially water insoluble additive and the counterpart salt forming species are both EINECS or ELINCS registered, The unreacted dry composition would not require notification under the present EU Dangerous Substance Directives, hence it would not necessitate all the costs of the testing required for such a notification. Whereas the soluble salt likely would require notification, with all the associated testing costs, if made by any third party or off-site.

Amongst the wide range of polymer additives available, such as antioxidants and UV stabilisers but not limited to these and many of which are substantially water insoluble there are some, that have the potential to form salts. That is they contain acidic moieties, such as carboxylic acid, that can form salts with an appropriate counterpart salt forming species.

Similarly additives that contain a carboxylic acid group may react with basic species, such as ammonia, organic amines, hindered amides, hydroxyl ions, alkoxides, but not limited to these, to form salts. The basic counterpart salt forming species used in the compositions of the present invention is 2-methylpentamethylenediamine.

Such salts may be substantially water soluble and can form solutions in a solvent that is wholly or substantially water.

Some such salts may have a less than desired solubility in water itself but can have a desirable solubility in solvent that is substantially water.

In another embodiment of this invention Irganox 1310, which is substantially water insoluble, is rendered water soluble by forming its salt with methylpentamethylenediamine. Such an aqueous solution can be added prior to, or during the polymerisation processes of polyamides such as nylon 8,6; nylon 6 and their copolymers.

### Examples

The following examples are given solely for the purpose of illustrating the present invention.

Nylostab SEED (CAS 42774-15-2) [N,N'-bis(2,2,6,6-tetramethyl-4-piperidinyl) - 1,3-benzenedicarboxamide] 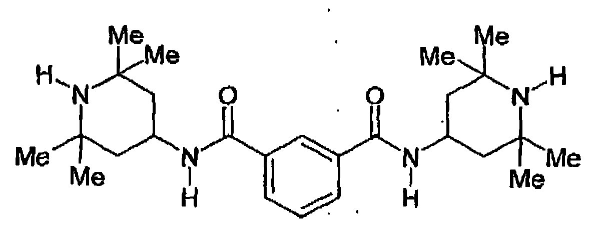 was obtained from Clariant UK Ltd. It has a solubility in water of 0.139 g/L (30°C) according to its safety data sheet, version 2-12/GB.

Irganox 1310 (CAS 20170-32-5) [3-(3,5-di-t-butyl-4-hydroxyphenyl)propionic acid] 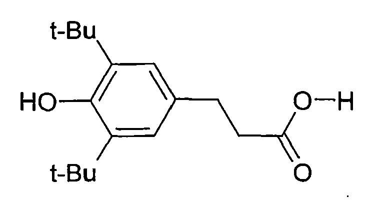 it is insoluble in water according to its safety data sheet, revision 07.12.1999.

### Tinuvin 770 (CAS 52829-07-9)

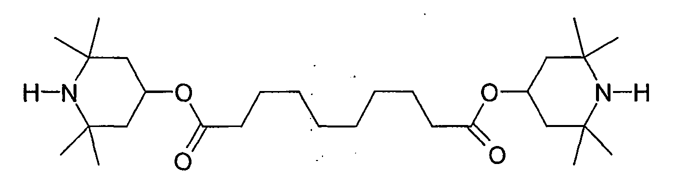

It has a solubility in water of < 0.01 g/100g (20°C) according to its technical data sheet, Date first Edition:1970.

Tinuvin 765 (CAS 41556-26-7 and 82919-37-7) [Bis(1,2,2,6,6-pentamethyl-4-piperidinyl) sebacate] 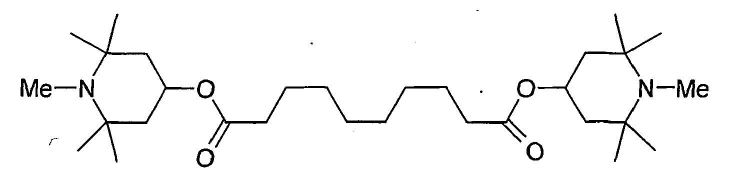 It has a solubility in water of < 0.01 % w/w (20°C) according to its technical data sheet, Date first Edition: Mar-81.

### Tinuvin 144 (CAS 63843-89-0)

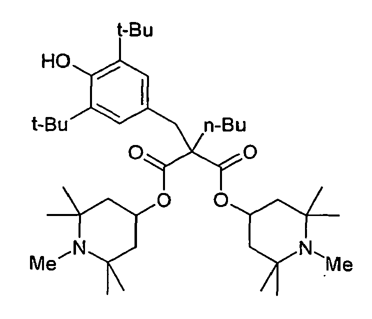

it is insoluble in water at 20°C according to its safety data sheet, 1226/6/NB KA 2.9 10.86.

### Tinuvin 622 (CAS 65447-77-0)

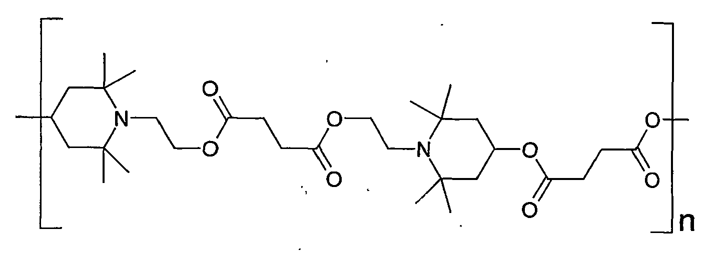

It has a solubility in water of < 0.01.g/100g (20°C) according to its technical data sheet, Date first Edition:1977.

### Chimassorb 9444 (CAS 71878-19-8)

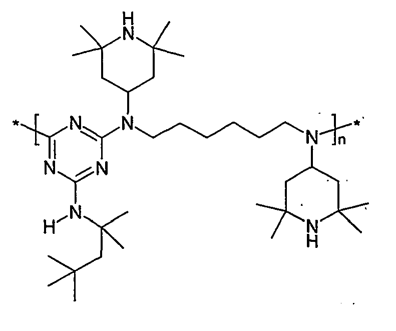

It has a solubility in water of < 0.01 g/100g (20°C) according to its technical data sheet, Date first Edition: Dec -75.
Tinuvin, Chimassorb and Irganox additives were obtained from Ciba Specialty Chemicals Inc, Basel, Switzerland.

### Cyasorb UV-3346 (CAS 82451-48-7)

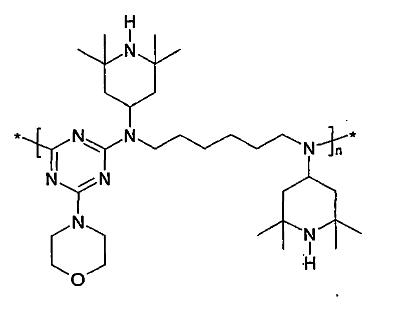

it has negligible solubility in water according to its safety data sheet, MSDS 0002571; date 09/02/2003.
Cyasorb was obtained from Cytec Industries B.V., Holland.

### TEST METHODS

Polymer relative viscosity (RV) is measured using the formic acid method according to ASTM D789-86, but using an Ubbelohde viscometer instead of the Ostwald type.

Polymer amine end group concentration (AEG) is measured by directed titration with standardised perchloric acid solution of weighed polymer samples dissolved in phenol/methanol mixture. Solutions were not filtered to remove insoluble delustering pigments, but allowance was made for them in calculating the concentrations. The reported amine end groups comprise any titrated traditional polyamide end groups (-NH₂), and any titrated hindered amine groups.

### EXAMPLE

### REFERENCE EXAMPLE 1

Nylostab SEED (4.43 g, 0.01 mol) was suspended in 24 g demineralized water at 22°C being stirred with a magnetic stimer - the Nylostab SEED wetted out but did not dissolve. Adipic acid was added in portions (0.15 g, 0.001 mol per portion) and the effects noted in Table 1:

| Total Adipic acid added (grams/mols) to 0.01 mol of Nylostab SEED suspension. | Comments |
|---|---|
| 0/0 | White suspension |
| 0.15/0.001 | " |
| 0.3010.002 | " |
| 0.45/0.003 | White suspension but getting slightly clearer |
| 0.60/0.004 | " |
| 0.75/0.005 | White suspension but getting dearer |
| 0.90/0.006 | " |
| 1.05/0.007 | " |
| 1.20/0.008 | " |
| 1.35/0.009 | Translucent, almost all solids dissolved |
| 1.50/0.010 | Clear solution. |

This illustrates that Nylostab SEED that is substantially insoluble in water may be rendered soluble by the addition of adipic acid. For Nylostab SEED a mol ratio of 1:1 acidic:basic groups accomplishes the solubilization in pure water using adipic acid as the source of acidic groups. In this example the final solution was 15 w% Nylostab SEED.

### REFERENCE EXAMPLE 2

Adipic acid (17.4 g, 0.119 mol) was added to 130 g demineralized water. Nylostab SEED (52.6 g. 0.119 mol) was gradually added and mixed in. The Nylostab SEED readily dissolved to form a clear solution. In this example the final solution was 26 w% Nylostab SEED.

### REFERENCE EXAMPLE 3

Terephthalic acid (1.66 g, 0.01 mol), Nylostab SEED (4.43 g, 0.01 mol) aid 24-36 g demineralized water were mixed together, the solids gradually dissolved to form a colourless solution. In this example the final solution was 15 w% Nylostab SEED.

### COMPARATIVE EXAMPLE 1

Isophthaic acid (1.66 g, 0,01 mol), Nylostab SEED (4.43 g, 0.01 mol) and 24.36 g demineralized water were mixed together, the solids gradually dissolved to form a colourless solution of the additive salt over 5 minutes, however a few minutes later a white suspension formed.

This illustrates that not all additive salts have a desirable level of solubility in a pure water solvent medium.

### REFERENCE EXAMPLE 4

Caprolactam (4.43 g) was dissolved In 11.6 g demineralized water. Nylostab SEED (4.43 g, 0.001 mol) was added and the suspension stirred. Isophthalic acid (1.66 g, 0.01 mol) was added and the Nylostab SEED dissolved to form a stable, clear colourless solution. The solution was 20 w% Nylostab SEED and 20 w% Caprolactam.

In comparison to Comparative Example 1 this example illustrates that it is possible to modify the solvent medium to render a salt that has less than a desirable solubility in water, soluble in a substantially water based solvent.

### REFERENCE EXAMPLE 5

Nylostab SEED (0.44 g, 0.001 mol) was suspended in 2.5 g demineralized water 3,3-thiodipropionic acid (0.18 g. 0.01 mol) was added. The Nylostab SEED rapidly dissolved. In this example the final solution was 14 w% Nylostab SEED.

### COMPARATIVE EXAMPLE 2

Nylostab SEED (0.44g, 0.001 mol) was suspended in 2.5 g demineralized water. Irganox 1310 (0.456 g, 0.002 mol) was added, the mix became slightly translucent, suggesting that some additive salt formation was occurring, however after a few minutes a white precipitate formed. An additional 2.5 g demineralized water failed to dissolve the solid.

This illustrates that not all additive salts have a desirable level of solubility in a pure water solvent medium.

### COMPARATIVE EXAMPLE 3

Nylostab SEED (0.44g, 0.001 mol) was suspended in 2.5 g demineralized water. Sulphuric acid (0.098g, 0.001. mol) was added, the Nylostab SEED dissolved immediately to form the additive salt, however after a few minutes a white precipitate formed. An additional 2,5 g demineralized water failed to dissolve the solid.

This illustrates that not all salts have a desirable level of solubility in a pure water solvent medium.

### REFERENCE EXAMPLE 6

Nylostab SEED (0.44g, 0.001 mol) was suspended in 2.5 g demineralized water. 35% Hydrochloric acid (0.209g, 0.002 mol) was added, the Nylostab SEED dissolved immediately, however, after a few minutes a white precipitate formed. An additional 2.5 g demineralized water dissolve the solid. In this example the final solution was 8 w% Nylostab SEED.

### REFERENCE EXAMPLE 7

Tinuvin 765 (5.09 g, 0.01 mol) was added to 7.32 g demineralized water, a two phase liquid-liquid system formed. Adipic acid (1.46 g, 0.01 mol) was added mixed. The two phase system gradually became a single phase system. In this example the final solution contained 37 w% Tinuvin 765.

### COMPARATIVE EXAMPLE 4

Tinuvin 770 (4.81 g, 0.01 mol) was suspended in 6.6 g demineralized water. Adipic acid (0.73 g, 0.005 mol) was added, the mix thickened and became gel like, but the Tinuvin 770 did not dissolve. An additional amount of adipic acid (0.73 g, 0.005 mol) was added but the Tinuvin still did not dissolve.

In comparison to Example 7 this shows that subtle differences in the additive structure (in the case of Tinuvin 770 the replacement of the Me group on the sterically hindered anime group by a Hydrogen atom as compared to Tinuvin 765) may effect the solubility of the additive salt.

### COMPARATIVE EXAMPLE 5

Pellets of Chimassorb 944 (5.98 g, 0.01 mol with respect to the polymer repeat unit) were mixed with 25 g demineralized water. Adipic acid (0.73 g, 0.005 mol) was added, some swelling of the Chimassorb 944 pellets occurred and the mix became gel like. A further amount of adipic acid was added (1.46 g, 0.01 mol) but the Chimassorb 944 did not dissolve.

### COMPARATIVE EXAMPLE 6

Tinuvin 144 (6.85 g, 0.01 mol) was mixed with 25 g demineralized water, the Tinuvin 144 did not wet out and floated on the surface of the water. Adipic acid (1.46 g, 0.01 mol) was added. The Tinuvin 144 wetted out but did not dissolve, further addition of adipic acid and heating to the boil failed to dissolve the Tinuvin 144.

### COMPARATIVE EXAMPLE 7

Tinuvin 622 (5.67 g, 0.01 mol with respect to the polymer repeat unit) was mixed with 25 g demineralized water. Adipic acid (1.46 g, 0.01 mol) was added but the Tinuvin 622 failed to dissolve.

### COMPARATIVE EXAMPLE 8

Pellets of Cyasorb UV-3346 (5.57 g, 0.01 mol with respect to the polymer repeat unit) were mixed with 25 g demineralized water. Adipic acid (1.46 g, 0.01 mol) was added, the pellets partially disintegrated over 24 hours to produce a creamy suspension but they did not dissolve.

### EXAMPLE 1

Irganox 1310 (0.278 g, 0.01 mol) was added to 1 g demineralized water, the Irganox 1310 failed to wet out and floated on the surface of the water. 2-methylpentamethylenediamine (0.196 g, 0.01 mol) was added, the Irganox 1310 dissolved to form a clear colourless solution The solution was 20 w% Irganox 1310.

Addition of a further 2 g of demineralized water resulted in the formation of a white precipitate. An additional amount of 2-methylpentamethylenediamine (0.116 g, 0.01 mol) was added and the precipitate dissolved. This solution was about 8 w% Irganox 1310.

This example illustrates that additional material beyond that required to form the salt may aid dissolution of the additive depending upon the concentration desired.

### COMPARATIVE EXAMPLE 9

Following the procedure of GB Pat. No. 1,356,220 Example 1, to 5.56g (0.02 mol) of Irganox 1310 (3-(3,5-di-t-butyl-4-hydroxyphenyl)propionic acid) in 20 mL isopropanol (which in our hands we found had to be heated to 65°C to effect dissolution) was added 1.4.7 g (0.01 mol) of 79.1 w% hexamethylenediamine solution (equivalent to 1.16 g pure hexamethylenediamine) in 5 mL isopropanol. The crystalline product precipitated immediately and the product was filtered, washed with isopropanol and dried, The melting point of the 1,6-hexamethylenediammonium bis(3,5-di-t-butyl-4-hydroxyphenyl)propionate salt was 202°C.

2.5 g of the product was added to 20 mL water with stirring, although the product did wet out, it failed to dissolve, but rather formed a thick suspension. Heating the mixture to 60°C falled to dissolve the product. Adding a further 200 ml of water at 25°C failed to dissolve the product.

This example demonstrated that the 1,6-hexamethylenediamminium bis(3,5-di-t-buty)-4-hydroxyphenyl)propionate salt is substantially insoluble in water.

In GB Pat. No. 1,356,220 Example 4 uses "a solution of 2.5 g (0.5%) [this refers to the additive weight on polymer that this example is concerned with] of the 1,6-hexamethylenediammonium bis(3,5-t-butyl-4-hydroxyphenyl)propionate in 20 mL of watsr.."

### COMPARATIVE EXAMPLE 10

2.07 g (0.074 mol) of Irganox 1310 was added to 20 mL of water, the Irganox 1310 failed to wet out and floated on the surface of the water 0.55 g (0.037 mol) 70.1 w% hexamethylenediamine solution (equivalent to 0.43 g pure hexamethylenediamine) was added. The consistency of the mixture changes as the Irganox 1310) "wets out", however, a thick white precipitate romains. Heating the mixture to 60°C fails to dissolve the product.

### COMPARATIVE EXAMPLE 11

Irganox 1310 (2.78 g, 0.01 mol) was added to 10 g demineralized water, the Irganox 1310 failed to wet out and floated on the surface of the water. Hexamethylenediamine (90%, 0.64 g, 0.005 mol) was added. The Irganox 1310 wetted out but formed a precipitate of a heavy white suspension. An additional amount of hexamethylenediamine (90%, 0.64 g, 0.005 mol) was added but this failed to dissolve the precipitate.. A further two additional amounts of hexamethylenediamine (90%, 0.64 g, 0.005 mol) were added but these failed to dissolve the precipitate. An additional 10 g of demineralized water was added but this failed to dissolve the suspension.

Similar results were obtained when m-Xylylenediamine was used in place of the hexamethylenediamine.

This illustrates that not all salts have a desirable level of solubility in a pure water solvent medium.

### EXAMPLE 2

Irganox 1310 (2.78 g. 0.01 mol) was added to 10 g demineralized water, the Irganox 1310 failed to wet out and floated on the surface of the water. NaOH (0.40 g, 0.01 mol) was added, the Irganox 1310 rapidly dissolved to form a clear colourless solution. The solution was 21 w% Irganox 1310.

### EXAMPLE 3

Irganox 1310 (0.276 g, 0.001 mol) was added to 1 g demineralized water, the Irganox 1310 failed to wet out and floated on the surface of the water. KOH (0.058 g, 0.001 mol) was added, the Irganox 1310 rapidly dissolved to form a clear colourless solution. The solution was 20 w% Irganox 1310.

### EXAMPLE 4

Irganox 1310 (2.78 g, 0.01 mol) was added to 10 g demineralized water, the Irganox 1310 failed to wet out and floated on the surface of the water. Triacetonediamine (CAS 36768-62-4) (1.56 g, 0.01 mol) was added, a clear colourless solution formed with most of the solids dissolved.

### REFERENCE EXAMPLE 8

Triacetonediamine (0.78 g, 0.005 mol) was dissolved in 10 g demineralized water. Irganox 1310 (2.07 g, 0.0075 mol) was added slowly in three portions of 0.69 g though not all the Irganox 1310 dissolved. The mixture was heated to about 75 °C but still not all the solids had dissolved, a further addition of 5 g demineralized caused a white precipitate to form. However, upon addition of a further amount of triacetonediamine (0.39 g, 0.0025 mol), bringing the mol ratio of Irganox 1310:triacetonediamine to 1:1, all solids dissolved to form a clear colourless solution. Upon cooling to room temperature the mix stayed as a clear colourless solution. The solution was 11 w% Irganox 1310.

### REFERENCE EXAMPLE 9

Nylostab SEED powder (8.86 g, 0.02 mol) and adipic acid powder (2.92 g, 0.02 mol) were tumble blended together. After 12 days there was no discernible change in the dry powder blend.

27.49 g of demineralized water was added to the dry powder blend and gently mixed. A clear colourless solution formed for which after 13 day left exposed to the air there was no visible colouration.

### REFERENCE EXAMPLE 10

Nylostab SEED (13.56 g), Adipic Acid (4.48 g) and 36.08 demineralized water were mixed together to form a clear colourless solution.

### REFERENCE EXAMPLE 11

### Preparation of Nylon-6,6 polymer containing Nylostab SEED

Pylon-6,6 homopolymer was prepared from a 51.5% aqueous solution of nylon-6,6 salt (prepared from hexamethylenediamine and adipic acid) placed in an agitated vessel together with a desired amount of a 30% aqueous hexamethylenediamine solution (the amount of excess diamine added to give the desired amine end group level in final polymer was determined by experimentation since some diamine is lost by evaporation) together with 44 parts per zillion of an antifoaming agent. An amount of a solutions comprising 22.56 parts Nylostab SEED, 7.44 parts Adipic Acid and 70 parts demineralized water was added such that the final polymer would contain an equivalent of 1500 ppm Nylostab SEED. This mixture was evaporated by heating from room temperature to 155° C. under 2.7 bar absolute pressure. Evaporation was terminated at 80 to 85% solids content. The concentrated slurry was transferred under an inert gas (nitrogen) to an autoclave and heat applied to the vessel to raise the temperature of the mixture. The autogenous pressure in the autoclave is maintained at 18.2 bar absolute. At 230° C. and 18.2 bar absolute, an amount of a 40% aqueous dispersion of a Titania pigment are injected into the autoclave using a 20 bar nitrogen pressure sufficient such that the final polymer would contain 0.86 w% of the titania pigment. At 245° C. the pressure in the autoclave is reduced to atmospheric pressure and further reduced to 0.545 bar absolute by the application of vacuum to the vessel and maintained for a period of about 30 minutes. The temperature of the vessel is maintained above the melt temperature of the polymer now formed, and the vessel pressure is then increased to atmospheric by removal of vacuum and introduction of dry nitrogen. Pressurised nitrogen at 4 to 5 bar absolute at about 285° C. is introduced to the vessel. The overpressure allows the polymer melt to flow, in the form of laces, from a vessel opening into a current of cooling water. These quenched laces of polymer are chipped (granulated) and further cooled with water. The polymer chips (about 4 mm long by 3 mm diameter) are then separated from the water and dried in air to a temperature below about 60° C. The resulting nylon-6,6 homopolymer had a relative viscosity (RV) of 49.5 as measured in 90% formic acid. The measured amine end groups (AEG) was 48.1 gram equivalents per 1000 kg of polymer (as measured by titration and comparison to known polymer standard samples).

## Claims

1. A polymer additive composition having more than about 5 w% water solubility at 25°C comprising: a substantially water insoluble polymer additive capable of forming a salt, said polymer additive having less than about 1 w% water solubility at 25°C, and 2-methylpentamethylenediamine as the counterpart salt forming species, wherein the additive is inherently acidic.

2. A polymer additive composition having more than about 5 w% solubility at 25°C in a mixture of water and water soluble organic compounds comprising: a substantially water insoluble polymer additive capable of forming a salt, said polymer additive having loss than about 1 w% water solubility at 25°C, and 2-methylpentamethylenediamine as the counterpart salt forming species, wherein the additive is inherently acidic.

3. A solution of the composition according to Claim 1 in water.

4. A solution of the composition according to Claims 1 or 2 in a mixture of water and water soluble organic compounds.

5. A composition according to Claim 1 or Claim 2, wherein the substantially water insoluble additive is 3- (3,5-di-t-butyl-4-hydroxyphenyl)propionic acid.

6. A composition according to Claim 4 wherein the water soluble organic compound is caprolactam.

7. A process wherein the composition according to any one of Claims 1-4 is added prior to or during a polymerisation process.

8. A process wherein the composition according to any one of Claims 1-4 is added after a polymerisation process.

## Patentansprüche

1. Polymeradditivzusammensetzung mit mehr als etwa 5 Gew.-% Wasserlöslichkeit bei 25°C, umfassend: ein im Wesentlichen wasserunlösliches Polymeradditiv, das ein Salz bilden kann, wobei das Polymeradditiv weniger als etwa 1 Gew.-% Wasserlöslichkeit bei 25°C besitzt und ein 2-Methylpentamethylendiamin hat, das als Salzgegenstück bildende Substanz gilt, wobei das Additiv von Natur aus sauer ist.

2. Polymeradditivzusammensetzung mit mehr als etwa 5 Gew.-% Wasserlöslichkeit bei 25°C in einer Mischung aus Wasser und wasserlöslichen organischen Verbindungen, umfassend: ein im Wesentlichen wasserunlösliches Polymeradditiv, das ein Salz bilden kann, wobei das Polymeradditiv weniger als etwa 1 Gew.-% Wasserlöslichkeit bei 25°C besitzt und ein 2-Methylpentamethylendiamin hat, das als Salzgegenstück bildende Substanz gilt, wobei das Additiv von Natur aus sauer ist.

3. Lösung der Zusammensetzung nach Anspruch 1 in Wasser.

4. Lösung der Zusammensetzung nach Anspruch 1 oder 2 in einer Mischung aus Wasser und wasserlöslichen organischen Verbindungen.

5. Zusammensetzung nach Anspruch 1 oder Anspruch 2, wobei das im Wesentlichen wasserunlösliche Additiv 3-(3,5-di-t-butyl-4-Hydroxyphenyl)propionsäure ist.

6. Zusammensetzung nach Anspruch 4, wobei die wasserlösliche organische Verbindung Caprolactam ist.

7. Verfahren, wobei die Zusammensetzung nach irgendeinem der Ansprüche 1 bis 4 vor oder während einem Polymerisationsprozess hinzugefügt wird.

8. Verfahren, wobei die Zusammensetzung nach irgendeinem der Ansprüche 1 bis 4 nach einem Polymerisationsprozess hinzugefügt wird.

## Revendications

1. Composition additive polymère ayant plus de 5% en poids environ de solubilité dans l'eau à 25°C comprenant : un additif polymère pratiquement insoluble dans l'eau capable de former un sel, ledit additif polymère ayant moins de 1% en poids environ de solubilité dans l'eau à 25°C et une diamine 2-méthylpentaméthylène en tant que substance formant la contrepartie en sel, dans laquelle l'additif est intrinsèquement acide.

2. Composition additive polymère ayant plus de 5% en poids environ de solubilité dans l'eau à 25°C dans un mélange d'eau et de composés organiques solubles dans l'eau comprenant : un additif polymère pratiquement insoluble dans l'eau capable de former un sel, ledit additif polymère ayant moins de 1% en poids environ de solubilité dans l'eau à 25°C, et une diamine 2-méthylpentaméthylène en tant que substance formant la contrepartie en sel, dans laquelle l'additif est intrinsèquement acide.

3. Solution de la composition selon la revendication 1 dans l'eau.

4. Solution de la composition selon les revendications 1 ou 2 dans un mélange d'eau et de composés organiques solubles dans l'eau.

5. Composition selon la revendication 1 ou la revendication 2, dans laquelle l'additif pratiquement insoluble dans l'eau est de l'acide propionique 3-(3,5-di-t-butyl-4-hydroxyphényle).

6. Composition selon la revendication 4, dans laquelle le composé organique soluble dans l'eau est du caprolactame.

7. Procédé dans lequel la composition selon l'une quelconque des revendications 1 à 4 est ajoutée préalablement à ou pendant un processus de polymérisation.

8. Procédé dans lequel la composition selon l'une quelconque des revendications 1 à 4 est ajoutée ultérieurement à un processus de polymérisation.
